# EUROPÄISCHE PATENTANMELDUNG

(11) **EP 2 184 153 A1**
(43) Veröffentlichungstag der Anmeldung: **12.05.2010**
(21) Anmeldenummer: 08019596.9
(22) Anmeldetag: 10.11.2008
(51) Int. Cl.: B29C 45/14

(54) **Verfahren und Vorrichtung zum Einlegen von Einlegeteilen wie Etiketten und dergleichen in ein Spritzgusswerkzeug**

(71) Anmelder: ifw Manfred Otte GmbH, 4563 Micheldorf (AT)
(72) Erfinder: Demmel, Andreas, 4810 Gmunden (AT); Ebner, Josef, 4563 Micheldorf (AT)
(74) Vertreter: Landgraf, Elvira

(57) **Zusammenfassung**

Die Erfindung betrifft ein Verfahren zum Einlegen von Einlegeteilen in eine Spritzgussform, gekennzeichnet durch folgende Verfahrensschritte:
Bereitstellen der Einlegeteile
Aufnehmen der Einlegeteile während des Öffnungsvorgangs der Spritzgussform mittels einer geeigneten Vorrichtung, beispielsweise eines Hebels (3)
Einlegen der Einlegteile in die Spritzgussform durch Bewegen der Vorrichtung, wobei die Bewegung der Vorrichtung durch ein Hebelwerk (4), das durch die Bewegung der Spritzgussform gesteuert wird, erfolgt, wobei die Vorrichtung beim Schließen der Spritzgussform einen Teil der formgebenden Oberfläche (5) darstellt.
Durchführen des Spritzvorgangs, und eine Vorrichtung zur Durchführung des Verfahrens.

## Beschreibung

Die Erfindung betrifft ein Verfahren und eine Vorrichtung zum Einlegen von Einlegeteilen in ein Spritzgusswerkzeug.

Unter Einlegeteilen werden hier Etiketten, Folien, Transponderfolien, dünnwandige Bleche, aber auch Einlegeteilen aus Metall, Kunststoff, Gummi und dergleichen verstanden.

Spritzgussteile, wie Fittings und dergleichen werden gemäß dem Stand der Technik mit produktrelevanten Daten versehen, wobei im Wesentlichen gravierte Stempel zur Aufbringung dieser Informationen verwendet werden.

Es wurde bereits vorgeschlagen Etiketten, die mit den gewünschten Daten versehen sind in ein Spritzgusswerkzeug einzulegen.
Das Etikett kann in die Spritzgießform beispielsweise manuell oder durch einen Bestückungsautomaten eingelegt werden.

Aufgabe der Erfindung ist es ein Verfahren und eine Vorrichtung zum Einlegen von Einlegeteilen, wie Etiketten, Folien, Transponderfolien, dünnwandige Bleche, aber auch Einlegeteilen aus Metall, Kunststoff, Gummi und dergleichen bereitzustellen, wobei die Vorrichtung einfach in das Spritzgusswerkzeug zu integrieren ist und das Einlegen der Einlegeteilen ohne zusätzliche Steuerungsvorrichtung erfolgen kann.

Gegenstand der Erfindung ist daher ein Verfahren zum Einlegen von Einlegeteilen in eine Spritzgussform, gekennzeichnet durch folgende Verfahrensschritte:
a) Bereitstellen der Einlegeteile
b) Aufnehmen der Einlegeteile während des Öffnungsvorgangs der Spritzgussform mittels einer geeigneten Vorrichtung, beispielsweise eines Hebels
c) Einlegen der Einlegteile in die Spritzgussform durch Bewegen der Vorrichtung, wobei die Bewegung der Vorrichtung durch ein Hebelwerk, das durch die Bewegung der Spritzgussform gesteuert wird, erfolgt, wobei die Vorrichtung beim Schließen der Spritzgussform einen Teil der formgebenden Oberfläche darstellt.
d) Durchführen des Spritzvorgangs.

Ein weiterer Gegenstand der Erfindung ist eine Vorrichtung zum Einlegen von Einlegeteilen in eine Spritzgussform, dadurch gekennzeichnet, dass die Vorrichtung aus folgenden Bauteilen besteht:
einem Behälter, Magazin, Rolle oder Spender zur Übergabe der Einlegeteile einem schwenkbares Aufnahmeteil, das die Einlegeteile aufnimmt und einen Teil der formgebenden Oberfläche bildet
ein Hebelwerk mit Führungsrollen zum Schwenken des Behälters, Magazins, der Rolle oder des Spender
einem Vakuumeinsatz, Magnet, statische Aufladung, mechanische Halterung zur Festlegung der Einlegeteile auf den schwenkbaren Aufnahmeteil

Als Einlegeteile kommen beispielsweise Etiketten, Gewindeteile, vorgeformte Teile, die anschließend mit einer weiteren Spritzgusskomponente umspritzt werden sollen.

Die Etiketten können dabei bereits vorbedruckt und vorgestanzt sein oder inline, beispielsweise mittels eines Digitaldruckers bedruckt und gestanzt werden.
Ferner können die Etiketten laserbeschriftet werden, wobei auch das Etikett beispielsweise vorher mit unstöchimetrischem Aluminiumoxid beschichtet sein kann. Diese schwarze Beschichtung wird dann durch Laserbeschriftung partiell verdampft, die Beschriftung erscheint dann silberig:

Ein Etikett kann entweder offline oder inline mit produkt- und/oder verwendungsspezifischen Informationen oder Funktionen bedruckt werden.

Produktrelevante Informationen sind beispielsweise Informationen über den Hersteller, das Material, die Produktionscharge, das Datum der Herstellung und dergleichen.

Verwendungsrelevante Informationen sind beispielsweise Informationen über mechanische oder thermische Beständigkeiten, Oberflächen (Innen-Außenseite), Leitfähigkeit, Haptik, optimale Verarbeitungs- bzw. lnstallationstemperatur des Spritzgussteils und dergleichen.

Ferner können als verwendungsspezifische Informationen Indikatoren beispielsweise für eine Temperaturanzeige, Feuchtigkeitsanzeige, Anzeige von Gasaus- oder eintritt (Dichtigkeit) und dergleichen aufgebracht werden.

Gegebenenfalls können auch kundenspezifische Informationen, wie beispielsweise Auftragsdaten, Barcodes für die maschinenlesbare Erfassung des Spritzgussteils und dergleichen aufgebracht sein. Ferner können auf dem Etikett Felder vorgesehen sein, die der Kunde selbst am fertigen Produkt bedrucken kann, beispielsweise mittels eines Inkjet-Druckers, eines Thermotransferdruckers oder eines Laserdruckers.

In besonderen Fällen können auch Sicherheitselemente und/oder verarbeitungsrelevante Elemente aufgebracht sein, beispielsweise RFID-Transponder, Chips, optisch aktive Strukturen, elektrisch letifähige Merkmale oder magnetische Merkmale, thermochrome Merkmale und dergleichen. Diese Elemente können sowohl zum Nachweis der Herkunft oder zur Identifizierung des Spritzgussteils, als auch zur Erkennung verarbeitungsrelevanter Daten, wie Temperatur und dergleichen oder auch im Falle eines Transponders zum Orten der Produkte dienen.

Diese Schichten können sowohl partiell als auch vollflächig aufgebracht sein und miteinander kombiniert sein.

Der Aufnahmeteil für die Einlegeteile ist als Teil der Spritzgussform ausgebildet. Dieses Aufnahmeteil ist vorzugsweise in Form eines Hebels ausgebildet, der beim Öffnen der Form ausschwenkt. Nach dem Aufnehmen des Einlegeteils aus dem Behälter wird die Form geschlossen. Dabei schwenkt das Aufnahmeteil mit der Schließbewegung der Form an seinen vorgesehenen Platz ein und bildet wieder einen Teil der formgebenden Oberfläche.
Zum Festlegen der Einlegeteile auf dem schwenkbaren Aufnahmeteil ist ein Vakuumeinsatz, Magnet, statische Aufladung, oder eine mechanische Halterung vorgesehen. Dadurch wird das Einlegeteil auf dem Aufnahmeteil auch während des Schenkvorgangs fixiert.

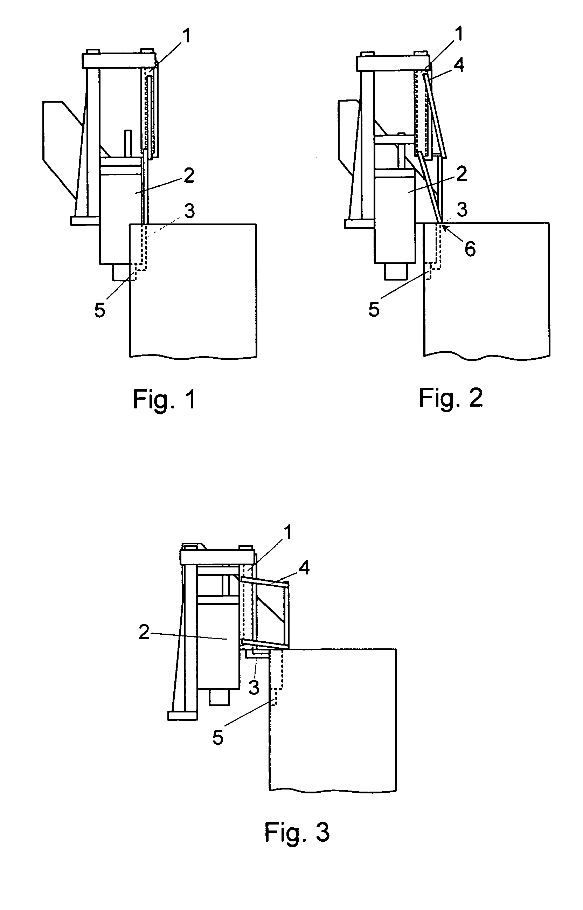

In den Figuren 1 bis 3 ist die beschriebene Vorrichtung, sowie der Ablauf des Einbringens der Einlegeteile dargestellt.

In den Figuren bedeuten 1 das Magazin, das die Einlegeteile enthält, 2 den Kernzug, 3 den Hebel, 4 das Hebelwerk, 5 die formgebende Oberfläche, 6 den Drehpunkt des Hebels.

In Figur 1 ist die Ausgangsposition dargestellt.
Das Werkzeug ist geschlossen.
Das Magazin (1), das die Einlegeteile enthält, befindet sich oberhalb des Kernzuges.

In Figur 2 ist das Werkzeug einen Spalt geöffnet. Das Magazin wird von der Auswerferseite mittels Führungsrollen mitgenommen. Das schwenkbare Aufnahmeteil (Hebel), der im späteren Ablauf das Einlegeteil entgegen nimmt wird dabei noch nicht bewegt.

In Figur 3 ist der weitere Öffnungsvorgang dargestellt.
Beim weiteren Öffnen des Werkzeuges wird durch die Bewegung der Hebel (3), mit denen das Magazin nach unten geschwenkt wird ein weiteres Hebelwerk angesteuert, welches den Hebel (3) so anlenkt, dass er um 90° aus der Form ausschwenkt und nun das Einlegeteil vom Magazin übernimmt.
Der Hebel (3), der das Einlegeteil übernimmt stellt im eingeklappten Zustand einen Teil der formgebenden Oberfläche (5) dar. Er hat an der Stelle an der er das Einlegeteil übernimmt einen Einsatz an dem ein Vakuum angelegt wird (nicht dargestellt), sodass das Einlegeteil beim Einschwenkvorgang und auch beim Einspritzvorgang fixiert ist.

## Patentansprüche

1. Verfahren zum Einlegen von Einlegeteilen in eine Spritzgussform, **gekennzeichnet durch** folgende Verfahrensschritte:
a) Bereitstellen der Einlegeteile
b) Aufnehmen der Einlegeteile während des Öffnungsvorgangs der Spritzgussform mittels einer geeigneten Vorrichtung, beispielsweise eines Hebels
c) Einlegen der Einlegteile in die Spritzgussform **durch** Bewegen der Vorrichtung, wobei die Bewegung der Vorrichtung **durch** ein Hebelwerk, das **durch** die Bewegung der Spritzgussform gesteuert wird, erfolgt, wobei die Vorrichtung beim Schließen der Spritzgussform einen Teil der formgebenden Oberfläche darstellt.
d) Durchführen des Spritzvorgangs.

2. Verfahren nach Anspruch 1, **dadurch gekennzeichnet, dass** als Einlegeteile Etiketten, Gewindeteile, zu/ umspritzende vorgeformte Teile oder Dichtungen verwendet werden.

3. Vorrichtung zum Einlegen von Einlegeteilen in eine Spritzgussform, **dadurch gekennzeichnet, dass** die Vorrichtung aus folgenden Bauteilen besteht:
einem Behälter, Magazin, Rolle oder Spender zur Übergabe der Einlegeteile einem schwenkbares Aufnahmeteil, das die Einlegeteile aufnimmt und einen Teil der formgebenden Oberfläche bildet
ein Hebelwerk mit Führungsrollen zum Schwenken des Behälters, Magazins, der Rolle oder des Spender
Vakuumeinsatz, Magnet, statische Aufladung, mechanische Halterung zur Festlegung der Einlegeteile auf den schwenkbaren Aufnahmeteil
